Europäisches Patentamt

European Patent Office

Office européen des brevets

(19)

(11) Publication number: **0 160 356**

**A1**

(12) # EUROPEAN PATENT APPLICATION

(21) Application number: **85301072.6**

(22) Date of filing: **21.02.85**

(51) Int. Cl.⁴: **G 01 B 7/04**

(30) Priority: **21.02.84 GB 8404469**

(43) Date of publication of application:
**06.11.85 Bulletin 85/45**

(84) Designated Contracting States:
**AT BE CH DE FR GB IT LI LU NL SE**

(71) Applicant: **Edeco Petroleum Services Limited
Howe Moss Place Kirkhill Industrial Estate
Dyce Aberdeen Aberdeenshire(GB)**

(72) Inventor: **Tonge, Brian Peter
1 Hazelwood Avenue
Harwood Bolton Lancashire(GB)**

(72) Inventor: **Burton, Ben
Bridge House Cann
Shaftsbury Dorset SP7 0BL(GB)**

(74) Representative: **Neill, Alastair William et al,
Appleyard Lees & Co. 15 Clare Road
Halifax West Yorkshire HX1 2HY(GB)**

(54) **Measuring Length.**

(57) A method of measuring an electrical conductor (11) comprises the steps of applying an alternating electrical signal to a point on the conductor, for example using a voltage controlled oscillator (18) and contact rollers (19), varying the frequency of the signal, detecting the resultant signal caused by reflection of the applied signal from one end of the conductor, for example using a detector (20), noting frequencies at which resonance causes peaks in the resultant signal indicating that the length of the conductor lying between the said point and the said one end of the conductor is a whole number multiple of the wavelength, and using said frequencies to calculate the said length, for example using a computer (15).

The method is particularly useful in measuring the length of a drill string.

1.

0160356

## Measuring Length

The invention relates to methods and apparatus for measuring length, for example the length of a drill string (or drilling rod) and the length of a wire line.

In the oil drilling and mining industries it is often necessary to know accurately the submerged length of a drill string or wire line.

Known methods currently in use include the following:-
For the measurement of drill string length, individual drill pipes are measured with a tape measure as the drill string is built up from the individual pipes and submerged, and the individual lengths are added together to give the total submerged length.

An alternative system also relies upon measuring the length of individual drill pipes but uses an instrument which fires a beam from a gun held at one end of a drill rod which is then reflected by a reflector held at the opposite end of the drill rod. The time taken for this beam to travel along the length of the drill rod and back again is then measured and the drill rod length can be computed from this information.

For the measurement of the length of a wire line a mechanical counter is used to count the number of revolutions of a wheel having a known circumference and revolving in contact with the wire. From this the total dispensed length of wire can be calculated.

We have now developed a simpler method of measuring the length of any electrically conducting material, including a drill string or a wire line.

The invention provides a method of measuring an electrical conductor comprising the steps of applying an alternating electrical signal to a point on the conductor, varying the frequency of the signal, detecting the resultant signal caused by the reflection of the applied signal from one end of the conductor, noting frequencies at which resonance causes peaks in the resultant signal indicating that the length of conductor lying between the said point and the said one end of the conductor is a whole number multiple of the wavelength, and using the said frequencies to calculate the said length.

The invention includes apparatus for measuring an electrical conductor comprising means for applying an electrical signal to a point on the conductor, means for varying the frequency of the signal, and means for detecting the resultant signal caused by the reflection of the applied signal from one end of the conductor.

The apparatus may include means for using the frequencies at which resonance causes peaks in the resultant signal to calculate the length of the conductor lying between the said point and the said one end of the conductor.

The means for applying the signal may comprise a voltage controlled oscillator.

The calculating means may comprise a computer.

The computer may be arranged to control the voltage controlled oscillator.

By way of example, a specific embodiment of the invention will now be described, with reference to the single accompanying Figure, which is a diagrammatic illustration of an embodiment of apparatus being used to calculate the length of a wire conductor according to the invention.

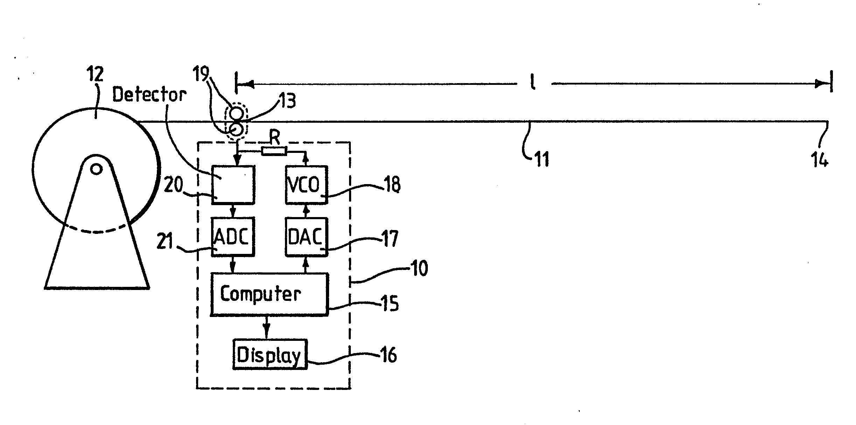

The measuring instrument 10 shown in the Figure is being used to measure the length l of a wire cable 11 that has been unwound from a cable drum 12. The desired length l is the length of cable extending between a point 13 on the cable and the free end 14 of the cable.

The measuring instrument 10 includes a computer 15 having a visual display 16. The computer is connected via a digital to analogue converter 17 to a voltage controlled oscillator 18. This oscillator is connected via a resistor R to a pair of electrically conductive pulley wheels 19 between which the wire 11 passes. Thus the pulley wheels 19 make electrical contact with the wire 11 at the point 13.

Also connected to the pulley wheels 19 is a detector 20 and this detector is connected to the computer 15 via an analogue to digital converter 21.

The apparatus is operated as follows. The computer commences a sequence of operations by generating a relatively low digital number and feeding this number to the digitial to analogue converter 17. A relatively low analogue voltage signal is then transmitted by the converter 17 to the voltage controlled oscillator 18. This produces a relatively low frequency alternating signal which is applied to the cable 11 at the point 13 via the rollers 19. This signal passes along the cable 11 towards the free end 14. When the signal reaches the free end 14 a proportion of the signal is reflected back from the free end of the cable. When the reflected signal returns to the point 13 the applied signal and the reflected signal combine together to produce a resultant signal. If the length 1 is a whole number multiple of the wavelength of the signal resonance will occur and there will be a significant peak in the resultant signal.

The resultant signal is detected by the detector 20 and is then converted back into digital form by the analogue to digital converter 21. Thus a digital signal is returned to the computer 15 which is related to the resultant signal detected at the point 13.

The computer then repeats the cycle, but with a higher digital number, thus causing a higher frequency signal to be applied to the cable.

By sweeping through a range of frequencies, and noting those frequencies at which peaks, i.e. resonance, occur, it is possible for the computer to calculate the length 1.

The theory is briefly as follows. When a first frequency produces a peak, the wavelength of the signal can be calculated from the frequency and the speed of propogation of the electrical signal in the cable. It is known that the length 1 is a whole number multiple of this calculated wavelength. From the next highest wavelength to produce a peak the length 1 can finally be calculated. The next highest wavelength can itself be computed from the frequency and the speed of propogation of the signal and the computer will then have the following two equations from which to calculate 1:

$$1 = n \times \text{first wavelength}$$
$$1 = (n + 1) \times \text{second wavelength}$$

where n is a whole number.

In practice a large number of frequencies may be utilised and compared to produce very accurate results.

The computer is arranged to indicate on its display 16 the computed length of the distance 1.

The computer may be arranged to provide a continuous readout of the length 1 as cable is paid out from the drum 12.

If a large length of cable is paid out from the drum 12, for example to be lowered down a drilling hole, before the first measurement is made, then the computer 15 may initially need to sweep through a wide range of frequencies to make its calculations. For subsequent measurements however, as more and more cable is paid out, the computer will have an awareness of the original length of cable that was paid out and will not need to sweep through such a wide range of frequencies.

The signal applied at point 13 will of course be transmitted towards the cable drum 12 as well, and there will be a reflected signal from the shorter length of wire extending between the point 13 and the cable drum. However this signal will have markedly different characteristics to the signal transmitted from the end 14. It will also be a fairly constant signal which will not vary significantly when the length l varies. This separate signal can thus readily be detected by the computer 15 and be filtered out or ignored.

The voltage controlled oscillator 18 has a tendency to try and maintain at a constant level the amplitude of the signal at point 13. The resistor R is present to, in effect, damp down at the point 13 the effect of this regulating property of the voltage controlled oscillator. If the effect were not damped down in this way, the voltage controlled oscillator would attempt to compensate for peaks created by resonance by attempting to reduce the size of the peaks.

It will be seen that the embodiment described above can be used to measure quickly and accurately the length of any electrical conductor lying between a desired point and one end of the conductor. If it is desired to measure the entire length of a conductor, for example the length of a drill pipe, the instrument 10 can be put in electrical contact with one end of the conductor using an electrical probe. The applied signal will then be transmitted to the other end of the conductor, reflected back from that other end of the conductor, and the entire length of the conductor can then be measured.

It will be appreciated that the apparatus described is much more versatile than the known apparatus. It can be used to measure both wires and drill strings in the oil drilling and mining industries and, indeed, can be used to measure the length of any other electrical conductor. It is for example much more versatile than a mechanical counter on a drum and access to the conductor is only required at a single point.

The invention is not restricted to the details of the foregoing embodiment.

0160356

## Claims

1. A method of measuring an electrical conductor comprising the steps of applying an alternating electrical signal to a point on the conductor, varying the frequency of the signal, detecting the resultant signal caused by the reflection of the applied signal from one end of the conductor, noting frequencies at which resonance causes peaks in the resultant signal indicating that the length of the conductor lying between the said point and the said one end of the conductor is a whole number multiple of the wavelength, and using the said frequencies to calculate the said length.

2. Apparatus for measuring an electrical conductor comprising means for applying an electrical signal to a point on the conductor, means for varying the frequency of the signal and means for detecting the resultant signal caused by the reflection of the applied signal from one end of the conductor.

3. Apparatus as claimed in claim 2, including means for using the frequencies at which resonance causes peaks in the resultant signal to calculate the length of the conductor lying between the said point and the said one end of the conductor.

4. Apparatus as claimed in claim 3, in which the calculating means comprise a computer.

5. Apparatus as claimed in any one of claims 2 to 4, in which the means for applying the signal comprises a voltage controlled oscillator.

6. Apparatus as claimed in claim 5, when dependent on claim 4, in which the computer is arranged to control the voltage controlled oscillator.

7. A method of measuring an electrical conductor, substantially as described herein with reference to the accompanying drawing.

8. Apparatus for measuring an electrical conductor, substantially as herein described with reference to the accompanying drawing.

0160356

1/1

## DOCUMENTS CONSIDERED TO BE RELEVANT

EP 85301072.6

| Category | Citation of document with indication where appropriate, of relevant passages | Relevant to claim | CLASSIFICATION OF THE APPLICATION (Int Cl 4) |
|---|---|---|---|
| X | DE - C - 953 921 (LICENTIA) <br> * Totality * | 1,2,3 | G 01 B 7/04 |
| X <br> Y | DE - B - 1 018 229 (LICENTIA) <br> * Totality * | 1,2,3 <br> 4,5 | |
| Y | GB - A - 2 053 480 (SELTRUST) <br> * Totality * | 4,5 | |

**TECHNICAL FIELDS SEARCHED (Int. Cl 4)**

G 01 B 7/00

The present search report has been drawn up for all claims

| Place of search | Date of completion of the search | Examiner |
|---|---|---|
| VIENNA | 03-07-1985 | TOMASELLI |